# EUROPÄISCHE PATENTSCHRIFT

(11) **EP 3 150 646 B1**
(45) Veröffentlichungstag und Bekanntmachung des Hinweises auf die Patenterteilung: **20.09.2023**
(21) Anmeldenummer: 16191252.2
(22) Anmeldetag: 29.09.2016
(51) Int. Cl.: C08G 18/32, C08G 18/34, C08G 18/08, C08G 18/66, C08G 18/75, C08G 18/10, C08G 18/38, C08G 18/44, C09D 175/06, C09D 175/08, C08F 283/00

(54) **WÄSSRIGE DISPERSIONEN ISOCYANAT-TERMINIERTER PHOSPHORHALTIGER PRÄPOLYMERE UND DARAUS HERGESTELLTE BESCHICHTUNGEN UND DEREN VERWENDUNG**
AQUEOUS DISPERSIONS OF PRE-POLYMERS CONTAINING ISOCYANATE-TERMINATED PHOSPHORUS AND COATINGS MADE FROM SAME AND USE
DISPERSIONS AQUEUSES DE PREPOLYMERES PHOSPHORES A TERMINAISON D'ISOCYANATE ET REVETEMENTS AINSI PRODUITS ET LEURS UTILISATION

(30) Priorität: 29.09.2015 DE 102015116528
(43) Veröffentlichungstag der Anmeldung: 05.04.2017
(73) Patentinhaber: SYNTHOPOL CHEMIE Dr. rer. pol. Koch GmbH & CO. KG, 21614 Buxtehude (DE)
(72) Erfinder: SIMON, Rolf, 21614 Buxtehude (DE); SPOHNHOLZ, Rüdiger, 22523 Hamburg (DE)
(74) Vertreter: Müller Schupfner & Partner Patent- und Rechtsanwaltspartnerschaft mbB

(56) Entgegenhaltungen:
- EP-A1- 2 623 571
- EP-B1- 2 764 030
- WO-A1-03/062296
- US-A- 3 076 010

## Beschreibung

Die vorliegende Erfindung betrifft wässrige, anionisch über Carboxyl- bzw. Sulfonatgruppen stabilisierte Dispersionen von isocyanat-terminierten Präpolymeren mit in die Polyurethan-Polymerstruktur eingebauten Organo-Phosphor-Verbindungen, Beschichtungen hergestellt mit derartigen Polyurethandispersionen und deren Verwendung in feuergehemmten wässrigen Beschichtungsmitteln, wie wässrigen, lufttrocknenden Lacken, wässrigen Einbrennlacken und wässrigen Zweikomponentenlacken.

### Stand der Technik

Um brandschutztechnische Anforderungen zu erfüllen, werden Werkstoffe wie Kunststoffe oder Beschichtungsmittel mit Flammschutzmitteln ausgerüstet. Die Flammschutzmittel dienen dazu, die Verbrennung zu hemmen oder ganz zu unterbinden. Die Verarbeitungs- und die Gebrauchseigenschaften flammgeschützter Werkstoffe können von denen ohne Flammschutz zum Teil deutlich abweichen. Auch für Beschichtungen auf Basis wässriger Polyurethandispersionen besteht häufig der Wunsch, diese mit einem Flammschutz auszustatten.

Nach Chemie und Wirkungsweise unterscheidet man halogenierte, phosphorhaltige und anorganische Flammschutzmittel. Halogenierte Flammschutzmittel wirken in der Gasphase, indem sie den Verbrennungsprozess chemisch unterbrechen. Anorganische Flammschutzmittel wie Aluminiumhydroxid oder Magnesiumhydroxid zersetzen sich im Brandfall, spalten dabei Wasser ab, verdünnen die Brandgase und kühlen die Brandstelle. Diese mineralischen Flammschutzmittel sind kostengünstig und unter Umweltgesichtspunkten in der Regel unbedenklich. Wegen der hohen Zugabemengen werden jedoch die Eigenschaften der Werkstoffe durch den Zusatz des anorganischen Flammschutzmittels häufig beeinträchtigt.

Phosphorhaltige Flammschutzmittel bauen auf der brennenden Oberfläche durch Verkohlen - manchmal verbunden mit Aufschäumen - eine Schutzschicht auf. Diese Schicht wirkt isolierend und dämmt den Sauerstoffzutritt zum Brandherd ein. Phosphorhaltige Flammschutzmittel wirken durch die Bildung einer "Polyphosphorsäure"-Schutzschicht in der kondensierten Phase. Gleichzeitig bildet sich durch eine Verkohlung Wasser, das kühlend wirkt. Die Mittel sind weitgehend umweltneutral und bezogen auf die eingesetzte Menge an Phosphor relativ wirksam. Typische als Additiv zumischbare Phosphor-Verbindungen sind Ammoniumpolyphosphat, Melaminpolyphosphat, roter Phosphor, Metallphosphinate, Phosphor- und Phosphonsäureester und Phosphazene. Nachteil all dieser flammhemmenden Zusätze ist, dass diese anorganischen Verbindungen unverträglich mit dem Bindemittel der Beschichtung sind und somit nur pigmentierte Lacke mit niedrigem Glanzgrad möglich sind, nicht aber z.B. Klarlacke.

Aus der WO 2013/050737 A1 sind organophosphorhaltige Verbindungen bekannt, die durch Umsetzung von (P-[[bis(2-hydroxyethyl)amino]methylphosphonat) mit niedermolekularen Diolen und monomeren Diisocyanaten und nachfolgender Hydrolyse der Phosphonat-Gruppe unter Erhalt einer Phosphatgruppe in eine wässrige Form überführt werden und aus dieser durch Filtration isoliert werden können. Als Monomere werden niedermolekulare Diole aber keine höher molekularen Polyole und keine Polyole mit Carboxyl- und/oder Sulfonat-Gruppen offenbart. Die organophosphorhaltige Verbindung liegt im Unterschied zur vorliegenden Erfindung in Wasser stets als Phosphat vor, andere anionische Gruppen sind zu vermeiden.

EP 2623571 A1 und WO 03/062296 A1 offenbaren Verfahren zur Herstellung von Polyurethanen, welche zur Herstellung von lichtempfindlichen und flammenresistenten Beschichtungen verwendet werden.

### Aufgabe der vorliegenden Erfindung

Es ist die Aufgabe der vorliegenden Erfindung, ein wässriges flammgehemmtes Bindemittel auf Polyurethanbasis zur Verfügung zu stellen, das für wässrige Ein- und Zwei-Komponenten-Beschichtungsmittel auf Basis von wässrigen Polyurethan-Beschichtungen geeignet ist. Nach einer Ausführungsform der Erfindung sollen auch Klarlacke mit üblichen Schichtdicken mit Flammschutz herstellbar sein. Weiterhin sollen durch den Einsatz der Phosphor-Verbindungen die Eigenschaften der Polyurethane, insbesondere die filmbildenden Eigenschaften möglichst wenig verändert werden.

### Zusammenfassung der Erfindung

Diese Aufgabe wird durch den Gegenstand der unabhängigen Patentansprüche gelöst. Vorteilhafte Ausgestaltungen sind Gegenstand der Unteransprüche oder nachfolgend beschrieben.

Die vorliegende Erfindung betrifft wässrige, anionisch und ggf. zusätzlich nicht-ionisch stabilisierte, mit einem Flammschutz ausgestattete Polyurethandispersionen und deren Herstellung.

Das Verfahren zur Herstellung der wässrigen Dispersion aufweisend ein isocyanat-terminiertes Präpolymer mit einem NCO/OH -Verhältnis von größer 1,1 : 1 bis 2,5 : 1, umfasst zumindest die Umsetzung von
- zumindest jeweils einem Alkohol A, B und C und ggf. D,
- mit zumindest einem Polyisocyanat aufweisend zumindest zwei Isocyanatgruppen,

- wobei der Alkohol A mindestens zwei Hydroxylgruppen und ein mittleres Molekulargewicht von 400 bis 5000 g/mol (Zahlenmittel) aufweist,
- wobei der Alkohol B mindestens zwei Hydroxylgruppen und entweder mindestens eine Sulfonsäure-Gruppe in der Salzform mit einem Alkali- oder Erdalkaligegenion oder mindestens eine Carboxyl-Gruppe (COOH - oder COO⁻-Gruppe, insbesondere eine COOH-Gruppe) aufweist,
- wobei der Alkohol C mindestens eine Seitengruppe und zwei Hydroxylgruppen oder mindestens eine Seitengruppe mit einer Epoxid-Gruppe aufweist, wobei die Seitengruppe des Alkohols C mindestens ein Phosphoratom, abgerückt von der Hauptkette (d.h. der Molekülstruktur des Alkohols C der Teil der Hauptkette wird) um zumindest ein Kohlenstoffatom, enthält und das Phosphoratom Teil einer Phosphinat-Gruppe O=P(-O-)(-C~)(-C~) ist,
- wobei der fakultative Alkohol D mindestens eine Hydroxylgruppe und mindestens eine Doppelbindung aufweist,
- das Präpolymer in Wasser dispergiert wird (unter zumindest teilweiser Neutralisation etwaiger freier Säure) und ggf.
- mit Kettenverlängerungsagenzien, wie Ethylendiamin und Diethylentriamin, umgesetzt wird

Es wurde gefunden, dass phosphorhaltige Monomere mit mindestens zwei Hydroxyl-Gruppen und ggf. weiteren funktionellen Gruppen sich anteilig an Stelle eines Polyols in die Polymerkette des Polyurethans einbauen lassen. Die Phosphorverbindung verliert dann ihren Additivcharakter, wie sie diesen nach dem Stand der Technik bisher beim bloßen Zumischen oder nachträglichem Additivieren als separate Komponente hat.

Dabei wird das phosphorhaltige Monomer so in die Hauptkette des Polyurethans eingebaut, dass das Phosphoratom Teil der Seitenkette wird und um mindestens ein Kohlenstoffatom von der Hauptkette abgerückt ist, vorzugsweise eine -CH₂-Gruppe. Das Phosphoratom im Alkohol C wird nach oder während des Einbaus in das Präpolymer nicht hydrolysiert bzw. anders ausgedrückt liegt vorzugsweise im Präpolymer nicht als Phosphat vor.

Der Einbau des Phosphoratoms in die Seitenkette ist mit dem Vorteil der geringeren Beeinflussung der Reaktionsparameter beim Polymeraufbau oder der Vernetzung bei der Filmbildung verbunden. Auch wird der Trocknungs- bzw. Härtungsverlauf der Harze dann nur unwesentlich durch die eingebauten Phosphor-Verbindungen beeinflusst, sodass die eigentlichen Eigenschaften des Beschichtungsmittels kaum nachteilig verändert werden.

Derart modifizierbare Polyurethane sind überraschenderweise gut als Dispersion herstellbar und lassen sich leicht mit anderen wässrigen Dispersionen, insbesondere Acrylat-Dispersionen oder anderen Polyurethan-Dispersionen mischen. Ebenfalls ist eine chemische Kombination von Polyurethan- und Acrylatkomponente auf diesem Reaktionsweg in sogenannten Hybriddispersionen möglich.

Die Modifizierung verändert die Rheologie der Dispersion weniger als würde ein Phosphor-Additiv nach dem bisherigen Stand der Technik physikalisch zugemischt werden. Weiterhin lässt sich ein hoher Phosphorgehalt einstellen, ohne die Polymereigenschaften wesentlich zu verändern, das Produkt ist lagerstabil, sedimentiert nicht und beeinflusst die Kinetik und Thermodynamik der Reaktionspartner der Polyurethansynthese unter den gewählten Reaktionsbedingungen nicht.

Die Erfindung hat ferner den Vorteil, dass bei der Herstellung des Polyurethan-Präpolymers keine toxikologisch bedenklichen, hochsiedenden Lösungsmittel wie zum Beispiel N-Ethylpyrrolidon und N-Methylpyrrolidon oder andere geeignete Lösungsmittel wie Dipropylenglykolmonomethylether eingesetzt werden müssen.

### Detaillierte Beschreibung der Erfindung

Die erfindungsgemäßen Polyurethane sind erhältlich durch Umsetzung von Alkoholen mit mindestens zwei Hydroxyl-Gruppen und Polyisocyanaten. Die Alkohole mit mindestens zwei Hydroxyl-Gruppen sind teilweise modifiziert. Es werden eingesetzt:
A) Alkohole mit mindestens zwei Hydroxyl-Gruppen und einem mittleren Molekulargewicht (Zahlenmittel) von 400 bis 5000 g/mol, vorzugsweise 500 bis 2000 g/mol,
B) Alkohole mit mindestens zwei Hydroxyl-Gruppen weiterhin aufweisend zumindest eine Carboxyl- Seitengruppe oder zumindest eine Sulfonat- Seitengruppe in Salzform, z.B. mit Natrium- und/oder Kalium-Gegenionen,
C) Alkohole mit mindestens zwei Hydroxyl-Gruppen weiterhin aufweisend zumindest eine ein Phosphor-Atom beinhaltende Seitengruppe, d.h. das Phosphoratom befindet sich nicht in der Hauptkette, die die beiden Hydroxyl-Gruppen verbindet,
   und ggf.
D) Alkohole mit mindestens zwei Hydroxyl-Gruppen weiterhin aufweisend Seitengruppen enthaltend mindestens eine Doppelbindung, welche nach einer Ausführungsform der vorliegenden Erfindung zur Herstellung der Polyurethane z.B. mit Acrylatmonomeren gepfropft werden können.

Die Polyolkomponenten, dies sind die obigen Alkohole A, Alkohole B, Alkohole C und ggf. Alkohole D, werden mit Polyisocyanaten oder deren Gemischen, nachfolgend gemeinsam Polyisocyanate genannt, zu Präpolymeren umgesetzt. In den Dispersionen kann aufgrund der Carboxyl- und/oder Sulfonsäuregruppen in Alkohol B auf den Einsatz von externen Emulgatoren verzichtet werden.

Die Alkohole A, B und C und ggf. D können gemeinsam oder sequentiell mit den Polyisocyanaten umgesetzt werden, z.B. erst A dann B und dann C und dann ggf. D.

Der Alkohol A ist frei von den Seitengruppen der weiteren Alkohole B bis D. Der Alkohol A ist im Mittel vorzugsweise 1,9 bis 4 wertig, besonders bevorzugt 1,9 bis 2,3 wertig. Vorzugsweise werden zwei- oder dreiwertige Alkohole oder deren Mischungen eingesetzt und weiter bevorzugt sind 90 mol% aller eingebauten Alkohole A zweiwertig.

Der Alkohol A weist ein mittleres Molekulargewicht von 400 bis 5000 g/mol (Zahlenmittel) auf, vorzugsweise ein mittleres Molekulargewicht von 500 bis 2000 g/mol (Zahlenmittel).

Der Alkohol A kann durch Homo- oder Copolymerisation von Ethylenoxid, Propylenoxid, Butylenoxid, Tetrahydrofuran, Styroloxid oder Epichlorhydrin oder durch Anlagerung mindestens einer dieser Verbindungen, gegebenenfalls im Gemisch oder nacheinander, an Startkomponenten mit reaktionsfähigen Wasserstoffatomen erhältlich sein. Typische Startverbindungen sind kurzkettige Diole mit 2 bis 6 Kohlenstoffatomen.

Weiterhin sind Polyesterpolyole als Alkohol A geeignet. Das Polyesterpolyol ist durch Umsetzung von zweiwertigem Alkohol mit zweiwertiger aliphatischer, cycloaliphatischer, arylaliphatischer oder aromatischer Carbonsäure und/oder dem entsprechenden Carbonsäureanhydrid erhältlich, wobei der zweiwertige Alkohol vorzugsweise Ethylenglykol, Propan-1,2-diol, Propan-1,3-diol, Butan-1,4-diol, 1,6-Hexandiol, Neopentylglykol, Trimethylolpropandiol, 1,4-Cyclohexyldimethanol, 2-Methylpropan-1 ,3-diol, 2- Methylpentan-2,4-diol, Diethylenglykol, Triethylenglykol, Polyethylenglykol, Polypropylenglykol, Dipropylenglykol, Dibutylenglykol oder eine Mischung davon ist, und die Carbonsäure oder das Carbonsäureanhydrid vorzugsweise Phthalsäure, Phthalsäureanhydrid, Isophthalsäure, Tetra- oder Hexahydrophthalsäureanhydrid, Cyclohexyldicarbonsäure, Maleinsäure, Maleinsäureanhydrid, Fumarsäure, dimere Fettsäure, aliphatische, lineare Dicarbonsäure mit einer Kohlenstoffanzahl von 2 bis 20 oder eine Mischung davon ist. Besonders geeignet sind Umsetzungsprodukte von zumindest Alkandiolen mit endständigen OH-Gruppen, wie z.B. 1,6-Hexandiol und 1,4-Butandiol, und zumindest aromatischen Dicarbonsäuren bzw. deren Anhydriden, wie z.B. Phthalsäure bzw. Phthalsäureanhydrid.

Nach einer weiteren Alternative ist der Alkohol A ein Polycaprolactondiol, wobei das Polycaprolactondiol z.B. aus epsilon-Caprolacton, beta-Propiolacton, gamma-Butyrolacton und/oder Methyl- epsilon-caprolacton oder einer Mischung davon erhältlich ist.

Nach einer bevorzugten weiteren Alternative ist der Alkohol A ein Polycarbonatdiol, vorzugsweise im Molekulargewichtsbereich (Zahlenmittel) von 500 - 5000 g/mol, insbesondere 500 - 2000 g/mol. Die Polycarbonatdiole enthalten als Starter und Co-Monomer kurzkettige zwei- oder dreiwertige Alkohole mit 2 bis 24, insbesondere 3 bis 10, Kohlenstoffatomen, typischerweise 1,6-Hexandiol, Neopentylglykol, 1,4-Dimethanol-Cyclohexan oder deren Gemische. Ebenso geeignet sind Polyestercarbonatdiole.

Darüber hinaus ist es auch möglich, Mischungen der oben genannten Alkohole A einzusetzen.

Der Alkohol B ist eine Verbindung, die mindestens zwei Hydroxyl- und eine Carboxyl-Gruppe (als freie Säure oder in Salzform) oder Sulfonsäure-Gruppe in Salzform enthält, und vorzugsweise Dimethylolpropionsäure oder Dimethylolbutansäure, insbesondere Dimethylolpropionsäure ist. Der Alkohol B weist z.B. 3 bis 10 Kohlenstoffatome auf, insbesondere 3 bis 6 (ohne das Gegenion, wie z.B. Trialkylammonium).

Die weiteren Alkohole C sind Organo-Phosphor-Verbindungen, wobei der Alkohol C
- mindestens eine Seitengruppe und zwei Hydroxylgruppen oder
- mindestens eine Seitengruppe und eine Epoxid-Gruppe aufweist,
wobei die Seitengruppe zumindest ein Kohlenstoffatom und mindestens ein Phosphoratom enthält und das Phosphoratom Teil einer Phosphinat-Gruppe O=P(-O-)(-C~)(-C~) ist. Im Sinne dieser Erfindung wird das Epoxid auch als Alkohol bezeichnet, weil das Epoxid wie eine Alkohol-Gruppe in das Polymer einbaut wird.

Beispiele für geeignete Alkohole C für die Integration in die Polyurethankette sind allein oder in Mischung folgende Organo-Phosphor-Verbindungen:
- 9,10-Dihydro-9-oxa-10-oxid-10-[2,3-di-(2-hydroxyethoxy)carbonylpropyl]-10-phosphaphenanthren-10-oxid (Verkaufsprodukt UKANOL FR 50/1 des Herstellers Schill+Seilacher, Deutschland) 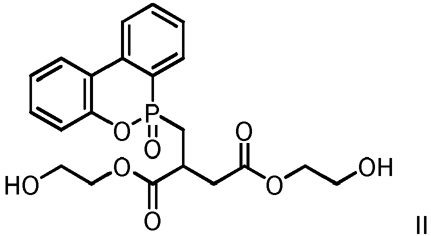
- 9,10-Dihydro-9-oxa-10-oxid-10-[1-propan-2,3-oxid]-10-phosphaphenanthren-10-oxid

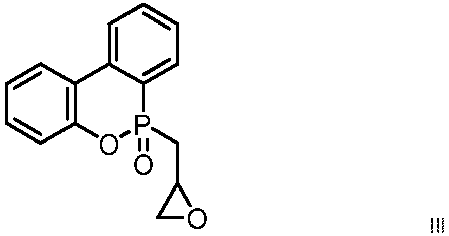

Eine Klasse von besonders geeigneten Organo-Phosphor-Verbindungen sind (organo) Phosphinate (mit z.B. O=P(-O-)(-C~)(-C~), vorzugsweise O=P(-O-)(-CH₂-)(-C~)). Diese können in reiner Form oder ggf. auch in nicht NCO-reaktiven Lösungsmitteln gelöst, eingesetzt werden.

Das Phosphoratom bzw. die Phosphinat- Gruppe ist um zumindest ein Kohlenstoffatom von der Polymerkette enthaltend die Urethan-Gruppen weggerückt. In den Formeln II und III ist es jeweils genau eine -CH₂-Gruppen. In dem Präpolymer liegt das Phosphoratom unverändert während des gesamten Herstellprozesses der Polyurethandispersion in der selben Oxidationsstufe wie im Alkohol C vor. Das Phosphoratom ist insbesondere kein Teil einer Phosphat-Gruppe bzw. Teil einer Gruppe, die P-OH Bindungen aufweist.

Fakultativ kann ein Alkohol D zugesetzt sein. Dies ist ein hydroxyfunktionelles Acrylatmonomer wie zum Beispiel Hydroxyethylacrylat, Hydroxyethylmethacrylat, Hydroxypropylmethacrylat und/oder Hydroxymethylacrylat oder auch deren Gemische. Alternativ kann auch ein Acrylatpolyol mit einer Hydroxylzahl von 20 bis 250 und mindestens einer freien Doppelbindung eingesetzt werden. Bevorzugt ist der Einsatz von Alkoholen D mit nur einer Hydroxylgruppe. Dies begrenzt die Viskosität des sich bildenden Präpolymers und vermeidet mögliche Gelierungen. Die erfindungsgemäße Herstellung der acrylgepfropften Polyurethandispersionen kann aber auch bei Verzicht auf Alkohol D lediglich durch radikalische Spaltung einer Kohlenstoff-Wasserstoffbindung erfolgen.

Die Alkohole A und Alkohole B werden vorzugsweise in einem Gewichtsverhältnis von 10 : 1 bis 2 : 1 eingesetzt, Alkohol A und Alkohol C in einem Gewichtsverhältnis von 50 : 1 bis 1: 5 und/oder Alkohol B und der Alkohol C in einem Gewichtsverhältnis von 3 : 1 bis 0,3 : 1, vorzugsweise 2 : 1 bis 0,5 : 1. Alkohol D wird in der Regel nur in geringeren Mengen als jeder der Alkohole A, B und C eingesetzt.

Die eingesetzten Polyisocyanate sind, gleich oder verschieden, Diisocyanate, wie z.B.
- Diisocyanate eines aromatischen Kohlenwasserstoffs mit 6 bis 15 Kohlenstoffatomen,
- Diisocyanate eines aliphatischen Kohlenwasserstoffs mit 4 bis 15 Kohlenstoffatomen, und/oder
- Diisocyanate eines cycloaliphatischen Kohlenwasserstoffs mit 6 bis 15 Kohlenstoffatomen.

Als Polyisocyanate sind beispielsweise geeignet Tetramethylxylylendiisocyanat, 1,6-Hexamethylendiisocyanat, Isophorondiisocyanat, 1,3-Xylylendiisocyanat, 2,2,4-Trimethyl-1,6-hexandiisocyanat, Toluoldiisocyanat, Dicyclohexylmethan-4,4'-diisocyanat und 4,4'-Diphenylmethandiisocyanat.

Vorzugsweise werden als Polyisocyanate Diisocyanate eines cycloaliphatischen Kohlenwasserstoffs mit 6 bis 15 Kohlenstoffatomen eingesetzt.

Die Umsetzung der Alkohole A, B und C mit den Polyisocyanaten zu isocyanat-terminierten Präpolymer mit einem NCO / OH -Verhältnis von größer 1,1 : 1 bis 2,5 : 1 erfolgt katalysatorfrei oder in Gegenwart eines Katalysators, wobei zinn-, titan-, wolfram- oder bismuth-haltige Katalysatoren bzw. deren Mischungen bevorzugt sind. Genannt seien exemplarisch Dibutylzinndilaurat, Dibutylzinnsäure und/oder Dibutylzinnoxid.

Bei der Herstellung des Präpolymers durch die Polyadditionsreaktion mit einem oder mehreren Polyisocyanaten können geringe Mengen an niedrigsiedenden Lösungsmitteln wie zum Beispiel Aceton oder Methylethylketon eingesetzt werden. Unter niedrigsiedenden Lösungsmitteln sind erfindungsgemäß solche gemeint, die bei Normaldruck (1013 mbar) einen Siedepunkt von weniger als 100 °C aufweisen. Im Unterschied hierzu werden vorliegend Lösungsmittel als hochsiedend bezeichnet, wenn sie bei Normaldruck einen Siedepunkt von größer 100 °C aufweisen.

Die niedrigsiedenden Lösungsmittel sind, falls im erfindungsgemäßen Verfahren eingesetzt, gegenüber den hochsiedenden ökonomisch vorteilhaft, weil sie nach der Herstellung der wässrigen Polyurethandispersion abdestilliert werden können und somit wiederverwendet werden können. Auch wenn bei der Herstellung des Präpolymers Lösungsmittel eingesetzt wird, ermöglicht somit das Verfahren die Herstellung von lösungsmittelarmen oder sogar nahezu lösungsmittelfreien Polyurethandispersionen. Solche Dispersionen sind ökologisch vorteilhaft, da sie bei der Weiterverarbeitung zu Beschichtungen keine oder nur sehr geringe Mengen an Lösungsmittel freisetzen, die eine umweltschädliche Wirkung entfalten könnten.

Die Zusammensetzungen des Präpolymers können nach einer Ausführungsform somit 10 bis 70 Gew.-% Lösungsmittel enthalten.

Als Lösungsmittel seien genannt Methoxyhexanon, Methylethylketon, Methylisobutylketon, Aceton oder eine Mischung davon, vorzugsweise Methylethylketon und/oder Aceton, insbesondere Methylethylketon.

Das Neutralisierungsmittel, das vor oder während des Dispergierens eingesetzt wird, ist insbesondere ein Amin, KOH und/oder NaOH, vorzugsweise ein Amin. Das Amin ist besonders bevorzugt ein tertiäres oder sekundäres Amin oder eine Mischung davon, bevorzugt N,N-Dimethylethanolamin, N-Methyldiethanolamin, Triethanolamin, N,N-Dimethylisopropanolamin, N-Methyldiisopropanolamin, N-Methylmorpholin, N-Ethylmorpholin, Triethylamin oder eine Mischung davon, insbesondere N,N-Dimethylethanolamin und Triethylamin. Der Neutralisationsgrad bezogen auf das stöchiometrische Verhältnis zwischen den vorhandenen Carboxylgruppen und der zugesetzten Aminmenge kann 60% bis 120% betragen.

Obige Amin-Verbindungen sind auch Grundlage des Ammonium-Gegenions, dass in dieser Erfindung verschiedentlich erwähnt ist, insbesondere als Gegenion für den Carboxyl-Gruppenhaltigen Alkohol B.

Zumindest nach der Neutralisation liegt die Carboxyl-Gruppe des Alkohols D in der Salzform mit einem Alkali-, Erdalkali- oder Ammonium-Gegenion vor.

Wenn der Alkohol B Sulfonat-Gruppen enthält ist für deren Neutralisation der Zusatz eines Neutralisierungsmittels nicht notwendig, weil das Gegenion wie z.B. Na bereits als Bestandteil des Monomers in der Zusammensetzung enthalten ist.

Das Dispergieren des Präpolymers in Wasser zum Erhalt der Polyurethandispersion wird insbesondere bei 5 bis 40 °C durchgeführt, wobei das Präpolymer in Wasser dispergiert wird oder Wasser zum Präpolymer hinzugegeben wird, wobei (jeweils) auf den Einsatz von Emulgatoren verzichtet werden kann.

Nach Dispergieren des Präpolymers in Wasser erfolgt nach einer Ausführungsform (i) die Umsetzung der noch vorhandenen NCO-Gruppen des Präpolymers mit einem üblichen Kettenverlängerer wie Di- oder Polyaminen, z.B. Ethylendiamin, Diethylentriamin oder höheren Homologen.

Nach einer anderen Ausführungsform (ii) wird das Präpolymer vor dem Dispergieren in Wasser mit einem bezogen auf die verbleibenden NCO-Gruppen im Präpolymer Überschuss einer OH-haltigen Komponente, die über eine weitere NCO-reaktive Gruppe wie eine Hydroxyl-Gruppe, verfügt, umgesetzt und dann dispergiert. In der Regel werden hierzu Ethanolamine oder ihre höherwertigen Homologen verwendet. Auf diese Weise wird auf eine Kettenverlängerung verzichtet und es werden OH-terminierte Polyurethane erhalten, die für eine spätere Umsetzung mit einem Vernetzer zur Verfügung stehen. Geeignete Vernetzer sind beispielsweise Polyisocyanate, Melamin-Harze, Polycarbodiimide und Polyaziridine.

Nach einer anderen Ausführungsform (iii) wird während der Herstellung des Präpolymers zusätzlich mit Alkohol D vorzugsweise in Anwesenheit von Acrylmonomeren wie z.B. Methylmethacrylat, Styrol, Butylacrylat, Butylmethacrylat, 2-Ethylhydroxylacrylat, Isobornylmethacrylat, Isobornylacrylat oder deren Gemische umgesetzt. Die Acrylatmonomere dienen hierbei als viskositätsreduzierendes Medium, gleich einem Lösungsmittel. Auf die Anwesenheit der weiter oben genannten Lösungsmittel kann in dieser Ausführungsform verzichtet werden, so dass lösungsmittelfreie Dispersionen erhalten werden. Die Dispergierung und Kettenverlängerung erfolgt wie für die Ausführungsformen (i) oder (ii). Dabei kann entweder das Präpolymer bereits nach Ende der Herstellung in der organischen Phase vollständig kettenverlängert werden oder (bevorzugt) als NCO-terminiertes Präpolymer in Wasser dispergiert und dann kettenverlängert werden, z.B. mit Diaminen, zum Erhalt eines dispergierten Polyurethans. Als letzter Reaktionsschritt erfolgt eine radikalische Polymerisation der zugefügten Monomere in Gegenwart des Polyurethans. Durch die Doppelbindung des Alkohols D werden die Acrylatmonomere somit in das Polyurethangerüst eingebaut. Das Verhältnis Polyurethan zu Polyacrylat kann dabei variieren von 20:1 bis 1:1, bevorzugt von 10:1 bis 3:1.

Die erfindungsgemäßen wässrigen Polyurethan-Dispersionen nach den Ausführungsformen (i), (ii) oder (iii) weisen mittlere Teilchendurchmesser von 10 bis 200 nm, vorzugsweise 30 bis 150 nm auf. Die Feststoffgehalte der Polyurethandispersionen weisen insbesondere einen Feststoffgehalt von 30 bis 55 Gew.%, vorzugsweise von 32 bis 40 Gew.-% auf, bestimmt nach DIN EN ISO 3251. Die Polyurethandispersionen können weiter durch eine Viskosität bei 20 °C von 10 bis 600 mPas, vorzugsweise 20 bis 300 mPas, nach DIN ISO 976 und unabhängig hiervon durch einen pH-Wert (ohne Verdünnung gemessen) bei 20 °C von 6,5 bis 9,5, vorzugsweise 7,0 bis 9,0, gekennzeichnet sein.

Der Polyurethandispersion können weiterhin Polyacrylate zugemischt sein, vorzugsweise erhältlich durch Zumischen einer wässrigen Polyacrylat-Dispersion (auch ohne dass die Alkohole D in das Präpolymer eingebaut sind) oder durch nachträgliche Pfropfung (wenn die Alkohole D eingebaut sind oder auch nicht) von geeigneten Acryl-Monomeren zum Erhalt einer bei 25°C bis 40°C lagerstabilen Polymerdispersion wie oben beschrieben.

Durch geeignete Rezeptierung nach dem Stand der Technik werden aus den erfindungsgemäßen Polyurethandispersionen Lacke hergestellt. Dies wird im Folgenden erläutert. Die wässrigen Polyurethandispersionen eignen sich insbesondere zur Herstellung von Klarlacken. Der Klarlack kann zur Verfilmung der Polyurethandispersion Koaleszenzmittel enthalten, wie Butylglykol oder Glykolether. Weiterhin kann der Klarlack Additive wie Entschäumer, Verdicker, Mattierungsmittel und/oder Netzmittel enthalten.

Die Klarlacke weisen bereits als luftgetrocknete 1-Komponenten-Filme (90 µm Rakelaufzug auf Glas, 24 h im Klimaraum bei 23°C und 50-60 % Luftfeuchte getrocknet) Pendeldämpfungen (Oberflächenhärte gemäß König nach DIN 53157 bestimmt mit einem Pendeldämpfungsgerät der Firma Byk) von größer 30 s, insbesondere größer 80 s, auf, insbesondere wenn es sich um einen Lack für Holz, Holzwerkstoffe, mineralische Baustoffe, Textilien, Metall oder Kunststoff handelt.

Als 2-Komponentenfilme (in Kombination mit in Wasser emulgierbaren Polyisocyanaten, wie z.B. Bayhydur 3100 des Herstellers Bayer Material Science, oder als Einbrennlacke in Kombination mit wasserverdünnbaren Melaminharzen oder wasserverdünnbaren blockierten Polyisocyanaten) sind die Pendelhärten gemäß obiger Probenvorbereitung größer 50 s, insbesondere größer 80 s, und stellen damit eine ausreichende Kratzfestigkeit und Oberflächenhärte bereit, wie es beispielsweise in der Holz-, Metall- und Kunststoffbeschichtung in vielen Fällen gefordert wird.

Die Erfindung betrifft ferner die Verwendung einer solchen Polyurethandispersion in wässrigen Beschichtungsmitteln, insbesondere in wässrigen Zwei-Komponenten-Beschichtungsmitteln oder wässrigen 1-Komponenten-Beschichtungsmitteln, wie zum Beispiel wässrigen Einbrennlacken und Beschichtungen.

Mögliche Substrate für die erfindungsgemäßen Beschichtungsmittel sind Holz, Holzwerkstoffe, mineralische Baustoffe, Metall, Textil, Leder, Kunststoff und Papier.

Typische Zwei-Komponenten-Beschichtungsmittel, z.B. lufttrocknend oder forciert trocknend, enthalten neben den erfindungsgemäßen Polyurethandispersionen typischerweise wasseremulgierbare Polyisocyanate auf Basis von HDI (1 ,6-Hexamethylendiisocyanat) und/oder IPDI (Isophorondiisocyanat). Daneben können noch typische Verlaufs- und Netzmittel eingesetzt werden. Typische Ein-Komponenten-Beschichtungsmittel enthalten neben den erfindungsgemäßen Polyurethandispersionen wasseremulgierbare Melaminharze oder wasseremulgierbare blockierte Polyisocyanate auf Basis von HDI und/oder IPDI, wie zum Beispiel für wässrige Einbrennlacke und -beschichtungen. Typische Gruppen zum Erhalt blockierter Polyisocyanate sind epsilon-Caprolactam, Malonester und Butanonoxim. Die Ein-Komponenten-Beschichtungsmittel werden als Einbrennlacke eingesetzt bei Temperaturen oberhalb von 120°C.

### Versuchsberichte

### Beispiel A

In einem Einliter - Dreihalskolben, ausgestattet mit einem mechanischen Rührwerk, Tropftrichter, Stickstoffeinleitungsrohr und Rückflußkühler, wurden 150 g eines Polycarbonatdiols des Molgewichtes MW=1000 mit Cyclohexandimethanol (Durez S2001-120, Hersteller Sumitomo Bakelite, Japan), 60 g Fyrol 6 (Hersteller ICL Industrial Products, Israel) und 35 g Dimethylolpropionsäure in 175 g Aceton vorgelegt und auf 60°C erwärmt. Bei dieser Reaktionstemperatur wurden 228 g 4,4'-Methylenebis(cyclohexylisocyanat) über 20 min unter Rühren und Stickstoffeinleitung zugetropft und nach Ende der Zugabe die Reaktionstemperatur auf 75°C erhöht. Die Reaktionsmischung wurde solange gerührt bis der NCO-Gehalt (bestimmt per Titration) 2,9% beträgt. Dann wurde die Reaktionsmischung auf 60°C abgekühlt und 22 g Triethylamin zugegeben und gut eingerührt. Danach wurde die Präpolymerlösung in 900 g Wasser (angereichert mit 3 g Triethylamin) unter Kühlung dispergiert und sofort danach 8 g Ethylendiamin in 30 g Wasser dazugegeben. Nach weiteren 60 min Rühren bei 25°C war der verbliebene NCO-Gehalt auf unter 0,1% abgefallen. Die entstehende Dispersion wurde bei 55-65°C unter Vakuum von 200-400 mbar solange destilliert, bis der verbleibende Acetongehalt (per Gaschromatographie bestimmt) unter 0,5 Gew.% gefallen war. Die fertige Dispersion wurde abgekühlt und über 50 µm filtriert.

Die Kenndaten lauten:

| | |
|---|---|
| Nichtflüchtiger Anteil (1g/1h/125°C Umluftofen / ohne Lösungsmittel): | 34,7 Gew.% |
| pH-Wert (unverdünnt gemessen mit Kapillarelektrode): | 7,8 |
| Viskosität (Rotation mit Haake VT 550 bei 20°C/D=444,6 1/s: | 65 mPas |
| Mittlere Teilchengröße (mit Malvern Zeta-Sizer Nano-S): | 27 nm |

### Beispiel B

In einem Einliter - Dreihalskolben, ausgestattet mit einem mechanischen Rührwerk, Tropftrichter, Stickstoffeinleitungsrohr und Rückflußkühler, wurden 150 g eines Polycarbonatdiols des Molgewichtes MW=1000 mit Cyclohexandimethanol (Durez S2001-120, Hersteller Sumitomo Bakelite, Japan), 90 g Fyrol 6 (Hersteller ICL Industrial Products, Israel) und 35 g Dimethylolpropionsäure in 175 g Aceton vorgelegt und auf 60°C erwärmt. Bei dieser Reaktionstemperatur wurden 269 g 4,4'-Methylenebis(cyclohexylisocyanat) über 20 min unter Rühren und Stickstoffeinleitung zugetropft und nach Ende der Zugabe die Reaktionstemperatur auf 75°C erhöht. Die Reaktionsmischung wurde solange gerührt bis der NCO-Gehalt (bestimmt per Titration) 3,0% betrug. Dann wurde die Reaktionsmischung auf 60°C abgekühlt und 22 g Triethylamin zugegeben und gut eingerührt. Danach wurde die Präpolymerlösung in 970 g Wasser (angereichert mit 3 g Triethylamin) unter Kühlung dispergiert und sofort danach 9 g Ethylendiamin in 30 g Wasser dazugegeben. Nach weiteren 60 min Rühren bei 25°C war der verbliebene NCO-Gehalt auf unter 0,1% abgefallen. Die entstehende Dispersion wurde bei 55-65°C unter Vakuum von 200-400 mbar solange destilliert, bis der verbleibende Acetongehalt (per Gaschromatographie bestimmt) unter 0,5 Gew.% gefallen war. Die fertige Dispersion wurde abgekühlt und über 50 µm filtriert.

| | |
|---|---|
| Nichtflüchtiger Anteil (1g/1h/125°C Umluftofen/ohne Lösungsmittel): | 37,0 Gew.% |
| pH-Wert (unverdünnt gemessen mit Kapillarelektrode): | 7,9 |
| Viskosität (Rotation mit Haake VT 550 bei 20°C/D=444,6 1/s : | 512 mPas |
| Mittlere Teilchengröße (mit Malvern Zeta-Sizer Nano-S) : | 24 nm |

### Beispiel C

In einem Einliter - Dreihalskolben, ausgestattet mit einem mechanischen Rührwerk, Tropftrichter, Stickstoffeinleitungsrohr und Rückflußkühler, wurden 208 g eines Polycarbonatdiols des Molgewichtes MW=1000 mit Cyclohexandimethanol (Durez S2001-120, Hersteller Sumitomo Bakelite, Japan), 80 g Ukanol FR 50/1, 65%iger Lösung in N-Imidazol mit einer gemessenen Hydroxylzahl von 117 (Hersteller Schill+Seilacher, Deutschland) und 49,3 g Dimethylolpropionsäure in 200 g Aceton vorgelegt und auf 60°C erwärmt. Bei dieser Reaktionstemperatur wurden 321,6 g 4,4'-Methylenebis(cyclohexylisocyanat) über 20 min unter Rühren und Stickstoffeinleitung zugetropft und nach Ende der Zugabe die Reaktionstemperatur bei 60°C gehalten. Die Reaktionsmischung wird solange gerührt bis der NCO-Gehalt (bestimmt per Titration) 5,9% betrug. Dann wurde die Reaktionsmischung auf 58°C abgekühlt und 31,2 g Triethylamin zugegeben und gut eingerührt. Danach wurde die Präpolymerlösung in 1235 g Wasser (angereichert mit 4,4 g Triethylamin) unter Kühlung dispergiert und sofort danach 28 g Ethylendiamin in 70 g Wasser dazugegeben. Nach weiteren 60 min Rühren bei 25°C war der verbliebene NCO-Gehalt auf unter 0,1% abgefallen. Die entstehende Dispersion wurde bei 55-65°C unter Vakuum von 200-400 mbar solange destilliert, bis der verbleibende Acetongehalt (per Gaschromatographie bestimmt) unter 0,5 Gew.% gefallen war. Die fertige Dispersion wurde abgekühlt und über 50 µm filtriert.

| | |
|---|---|
| Nichtflüchtiger Anteil (1g/1h/125°C Umluftofen/ohne Lösungsmittel): | 34,2 Gew.% |
| pH-Wert (unverdünnt gemessen mit Kapillarelektrode): | 7,7 |
| Viskosität (Rotation mit Haake VT 550 bei 20°C/D=444,6 1/s: | 15 mPas |
| Mittlere Teilchengröße (mit Malvern Zeta-Sizer Nano-S): | 72 nm |

### Beispiel D (Vergleichsversuch ohne Organo-Phosphorverbindung)

In einem Einliter - Dreihalskolben, ausgestattet mit einem mechanischen Rührwerk, Tropftrichter, Stickstoffeinleitungsrohr und Rückflußkühler, wurden 234 g eines Polycarbonatdiols des Molgewichtes MW=1000 mit Cyclohexandimethanol (Durez S2001-120, Hersteller Sumitomo Bakelite, Japan) und 44 g Dimethylolpropionsäure in 220 g Aceton vorgelegt und auf 60°C erwärmt. Bei dieser Reaktionstemperatur wurden 289,6 g 4,4'-Methylenebis(cyclohexylisocyanat) über 20 min unter Rühren und Stickstoffeinleitung zugetropft und nach Ende der Zugabe die Reaktionstemperatur bei 60°C gehalten. Die Reaktionsmischung wurde solange gerührt bis der NCO-Gehalt (bestimmt per Titration) 5,9% beträgt. Dann wurde die Reaktionsmischung auf 58°C abgekühlt und 28,1 g Triethylamin zugegeben und gut eingerührt. Danach wurde die Präpolymerlösung in 1110 g Wasser (angereichert mit 4 g Triethylamin) unter Kühlung dispergiert und sofort danach 25,3 g Ethylendiamin in 63 g Wasser dazugegeben.

Nach weiteren 60 min Rühren bei 25°C war der verbliebene NCO-Gehalt auf unter 0,1% abgefallen. Die entstehende Dispersion wurde bei 55-65°C unter Vakuum von 200-400 mbar solange destilliert, bis der verbleibende Acetongehalt (per Gaschromatographie bestimmt) unter 0,5 Gew.% gefallen war. Die fertige Dispersion wurde abgekühlt und über 50 µm filtriert.

| | |
|---|---|
| Nichtflüchtiger Anteil (1g/1h/125°C Umluftofen/ohne LSM) : | 34,9 Gew.% |
| pH-Wert (unverdünnt gemessen mit Kapillarelektrode): | 7,7 |
| Viskosität (Rotation mit Haake VT 550 bei 20°C/D=444,6 1/s: | 20 mPas |
| Mittlere Teilchengröße (mit Malvern Zeta-Sizer Nano-S) : | 31 nm |

### Beispiel E (acrylgepfropfte Polyurethandispersion)

In einem Zweiliter - Dreihalskolben, ausgestattet mit mechanischem Rührwerk, Tropftrichter, Stickstoffeinleitungsrohr und Rückflußkühler, wurden 159 g eines Polytetramethylenetherglykols des Molgewichtes MW=1000 mit der Bezeichnung Terathane 1000 der Fa. BASF, 60 g Ukanol FR 50/1 (65%ige Lösung in Dimethylimidazol der Fa. Schill und Seilacher), 53,3 g Dimethylolpropionsäure und 234,3g 4,4'-Methylenebis(cyclohexylisocyanat) in 104 g Proglide DMM (Hersteller DOW) vorgelegt und auf 90°C erwärmt. Bei dieser Reaktionstemperatur wurde solange gehalten bis der NCO-Gehalt (bestimmt per Titration) 4,2 Gew % betrug . Die Reaktionsmischung wurde auf 45°C abgekühlt und dabei mit 440 g Methylmethacrylat und 50 g Ethylacrylat verdünnt. Nach 30 min Reaktionszeit bei 45°C wurde die Reaktionsmischung mit 37,2 g Triethylamin versetzt und dieses gut eingerührt. Danach wurde die Präpolymerlösung in 1235 g Wasser (angereichert mit 3 g Triethylamin) unter Kühlung dispergiert und sofort danach 12,5 g Ethylendiamin in 32 g Wasser dazugegeben. Nach weiteren 60 min Rühren bei 25°C war der verbliebene NCO-Gehalt auf unter 0,1% abgefallen. Die Dispersion wurde auf 40°C erwärmt und nacheinander 2 g tert-Butylhydroperoxid (70%ig) in 32 g Wasser sowie 0,9 g Ascorbinsäure in 32 g Wasser zugegeben. Dabei trat Exothermie auf 70°C auf. Bei dieser Temperatur wurde 2 Stunden gerührt, danach auf 30°C abgekühlt und mit 0,8 g 30%iger wässriger Ammoniaklösung versetzt. Die fertige Dispersion wurde über 50 µm filtriert.

| | |
|---|---|
| Nichtflüchtiger Anteil (1g/1h/125°C Umluftofen/ohne LSM) : | 40,0% |
| pH-Wert (unverdünnt gemessen mit Kapillarelektrode) | 7,5 |
| Viskosität (Rotation mit Haake VT 550 bei 20°C/D=444,6 1/s | 75 mPas |
| Mittlere Teilchengröße (mit Malvern Zeta-Sizer Nano-S) | 125 nm |

Aus den so erhaltenen Polyurethandispersionen Beispiel A bis Beispiel E wurden folgende Lacke formuliert:

| | **(1)*** | **(2)** | **(3)*** | **(4)** | **(5)** | **(6)** | **(7)*** |
|---|---|---|---|---|---|---|---|
| Rohstoff (Hersteller) | | | | | | | |
| demin. Wasser | 6,1 | 6,1 | 6,1 | 6,1 | 6,1 | 6,1 | 6,1 |
| Butylglykol Co-Lösemittel | 7,5 | 7,5 | 7,5 | 7,5 | 7,5 | 7,5 | 7,5 |
| Acrysol RM 8W (1:5 H₂O verdünnt) Polyurethanverdicker (DOW) | 2,5 | 2,5 | 2,5 | 2,5 | 2,5 | 2,5 | 2,5 |
| Aquacer 513 Wachsemulsion 35 Gew.% Feststoff (Byk) | 2,5 | 2,5 | 2,5 | 2,5 | 2,5 | 2,5 | 2,5 |
| Byk 333, silikonhaltiges Verlaufsmittel (Byk) | 0,3 | 0,3 | 0,3 | 0,3 | 0,3 | 0,3 | 0,3 |
| Byk 346 Netzmittel (Byk) | 0,3 | 0,3 | 0,3 | 0,3 | 0,3 | 0,3 | 0,3 |
| Foamex 800 (1:1 H₂O) Entschäumer (Tego) | 0,3 | 0,3 | 0,3 | 0,3 | 0,3 | 0,3 | 0,3 |
| Dehydran 1293 Entschäumer (BASF) | 0,5 | 0,5 | 0,5 | 0,5 | 0,5 | 0,5 | 0,5 |
| Beispiel A | | | | | 80,0 | | |
| Beispiel B | | | | | | 80,0 | |
| Beispiel C | | | | | | | 80,0 |
| Beispiel D | | 80,0 | | 80,0 | | | |
| Beispiel E | 80,0 | | 80,0 | | | | |
| | | | | | | | |
| Stammlack in Gewichtsteilen GT | 100 | 100 | 100 | 100 | 100 | 100 | 100 |

| | | | | | | | |
|---|---|---|---|---|---|---|---|
| die mit * gekennzeichneten Lacke sind erfindungsgemäß | | | | | | | |

### Legende:

(a) Erlischt, es bildet sich fester Schaum
(b) Erlischt mit kurzer Verzögerung, keine Schaumbildung
(c) Erlischt sofort, es bildet sich feinporiger Schaum
(d) Erlischt, es bildet sich etwas grobporiger Schaum als bei C
(e) Schwer entzündlich, Schaumbildung, erlischt sofort
(e) Schwer entzündlich, Schaumbildung, erlischt sofort
(e) Schwer entzündlich, Schaumbildung, erlischt sofort

| | | |
|---|---|---|
| *** leicht weißlich | Beständigkeit: | ++ = sehr gut |
| wl. = weißlich | 0 = klar | + = gut |
| l= leicht | 1 = leicht bläulich | Δ = befriedigend |
| BI= leichte Blasen | 2= bläulich | |
| kl = klebrig | 3= leicht weiß | nmb = nicht messbar |
| ag. = angelöst | 4 = weiß | s.F. = sichtbare Flecken |
| | 5= weiß+zerstört | |

| **Eigenschaften** | | | | **(1)*** | **(2)** | **(3)*** | **(4)** | **(5)** | **(6)** | **(7)*** |
|---|---|---|---|---|---|---|---|---|---|---|
| Viskosität nach DIN EN ISO 2431, 4 mm Auslaufzeit des Stammlackes | | | | 23" | 20" | 23" | 20" | 60" | nmb | 13" |
| Polyisocyanat Bayhydur 3100, Bayer (80 GT) + Methoxypropylacetat (20 GT), | | | | | | 10,0 | 10,0 | 10,0 | 10,0 | 10,0 |
| Demin.Wasser | | | | | | 5% | 2% | | 10% | |
| Viskosität nach DIN EN ISO 2431 4 mm Auslaufzeit sofort nach Polyisocyanat Zugabe | | | | 23" | 20" | 27" | 28" | 240" | 215" | 16" |
| pH-Wert | | | | 7,5 | 7,7 | 7,5 | 7,7 | 7,8 | 7,7 | 7,2 |
| Transparenz | | | | | | | | | | |
| 0 = transparent | | | 1 = leicht bläulich | | | | | | | |
| 2= bläulich | | | 3= leicht weiß | | | | | | | |
| | Transparenz nass | | | 1 | 0-1 + | 2- | 2-3 | 2-3 | 1 | 2-3 |
| | Transparenz trocken nach 60' bei 60°C | | | 0-1 + | 0 | 1 | 1 | 1 + | 0 | 0-1 |
| Pendelhärte nach erst 30' RT, dann 60' bei 60°C und dann 30' RT nach DIN EN ISO 1522 | | | | 149" | 146" | 111" | 119" | 131" | 148" | 164" |
| Beständigkeit nach | | | | | | | | | | |
| | 30'RT,60'60°C,30'RT | | | 1-2 BI | 0-1 BI | 0 | 0 | 0 | 0 | 0-1 |
| | demin.Wasser | | 15' | | | | | | | |
| | | | 30' | 1-2 BI | 1 BI. | 0 | 0-1 | 0 | 0 | 1 |
| | | | 60' | 2 BI. | 1 BI. | 0-1 + I.BI. | 1 | 0- | 0-1 | 1 BI |
| | nach Regeneration (Bewertung nach 1h im Klimaraum) | | | 0-I BI. | 0 | 0 | 0 | 0-1 | 0 | 0 |
| 2x 200µm auf Holzbretter aufziehen, Anfeuerung | | | | ++ | Δ | + | Δ | + | Δ- | + |
| Schleifbarkeit nach 3h RT | | | | Δ+ | Δ | Δ | Δ- | Δ- | Δ | Δ+ |
| Glanz DIN EN ISO 2813 | | | | | | | | | | |
| | | 60° Winkel | | 60 | 78 | 46 | 64 | 70 | 49 | 68 |
| | | 85° Winkel | | 69 | 81 | 68 | 74 | 80 | 52 | 77 |
| Beständigkeitsprüfung nach 16h 40°C | | | | | | | | | | |
| Senf 5h sofort/ nach 1d RT (Skala aber gelb statt weiß) | | | | 1-2/ | 0-1+/ | 2/ | 0-1/ | 1/0-1 | 2/0-1 | 0-1/0-1 |
| Kaffee 5h sof./nach 1d RT (Skala aber gelb statt weiß) | | | | 2-3*** | 2-3+ | 1/ | 0-1/ | 1-1 | 1-2/1-2 | 0-1/0-1 |
| Ethanol 48% 1h sofort | | | | weiß I.BI (3-4) | l.wl. kl. ag. (5) | stark s.F. (2) | stark s.F. (2) | 2 | 2 | 2 |
| Ethanol 48% 1h n.Reg. | | | | min. w.mat (4) | weiß (5) | l.s.F. (1) | l.s.F. (1) | 0-1 | 0-1 | 0-1 |
| Brandverhalten 10" über Gasbrenner gehalten (empirisch) | | | | (a) | (a) | (a) | (a) | (e) | (e) | (e) |

## Patentansprüche

1. Verfahren zur Herstellung einer wässrigen Dispersion aufweisend ein isocyanatterminiertes Präpolymer mit einem NCO/OH -Verhältnis von größer 1,1 : 1 bis 2,5 : 1, umfassend zumindest die Umsetzung von
- zumindest jeweils einem Alkohol A, B und C und ggf. D,
- mit zumindest einem Polyisocyanat aufweisend zumindest zwei Isocyanatgruppen,
- wobei der Alkohol A mindestens zwei Hydroxylgruppen und ein mittleres Molekulargewicht von 400 bis 5000 g/mol (Zahlenmittel) aufweist,
- wobei der Alkohol B mindestens zwei Hydroxylgruppen und entweder mindestens eine Sulfonsäure-Gruppe in der Salzform mit einem Alkali- oder Erdalkaligegenion oder mindestens eine Carboxyl-Gruppe (COOH - oder COO⁻-Gruppe) aufweist,
- wobei der Alkohol C mindestens eine Seitengruppe und zwei Hydroxylgruppen oder mindestens eine Seitengruppe mit einer Epoxid-Gruppe aufweist, wobei die Seitengruppe mindestens ein Phosphoratom, abgerückt von der Hauptkette um zumindest ein Kohlenstoffatom, enthält und das Phosphoratom Teil einer Phosphinat-Gruppe O=P(-O-)(-C~)(-C~) ist,
- wobei der fakultative Alkohol D mindestens eine Hydroxylgruppe und mindestens eine Doppelbindung aufweist und
das Präpolymer in Wasser dispergiert wird

2. Verfahren nach Anspruch 1, wobei der Alkohol A ein Polyetherpolyol, Polyesterpolyol, Polycarbonatdiol, Polyacrylatpolyol, Polyhydroxylolefin, Polycaprolactondiol oder eine Mischung davon ist und auch unabhängig hiervon vorzugsweise der Alkohol A ein mittleres Molekulargewicht von 500 bis 2000 g/mol (Zahlenmittel) aufweist.

3. Verfahren nach einem der vorhergehenden Ansprüche, wobei der Alkohol A eine mittlere OH-Funktionalität von 1,9 bis 4, vorzugsweise 1,9 bis 2,3 aufweist.

4. Verfahren nach einem der vorhergehenden Ansprüche, wobei der Alkohol B 3 bis 10 Kohlenstoffatome, insbesondere 3 bis 6 Kohlenstoffatome, enthält.

5. Verfahren nach einem der vorhergehenden Ansprüche, wobei das Phosphoratom über eine CH₂-Gruppe an die Hydroxyl-Gruppen aufweisende Hauptkette gebunden ist.

6. Verfahren nach einem der vorhergehenden Ansprüche, bei dem der Alkohol D ein hydroxylfunktionelles Acrylatmonomer mit 3 bis 8 Kohlenstoffatomen ist und vorzugsweise nur eine Hydroxylgruppe aufweist.

7. Verfahren nach einem der vorhergehenden Ansprüche, wobei das Präpolymer wie folgt aufgebaut wird, dass
55-90 % der C-Atome von Alkohol A gebildet werden, insbesondere 75-85 %;
5 - 15 % der C-Atome von Alkohol B gebildet werden, insbesondere 8 bis 12 %;
0.1 - 25 % der C-Atome von Alkohol C gebildet werden, insbesondere 0,5 -10 %; und ggf.
0 - 5 % der C-Atome von Alkohol D gebildet werden, insbesondere 0,1 -3 %.

8. Verfahren nach einem der vorhergehenden Ansprüche, wobei
(a) der Alkohol A und der Alkohol B in einem Gewichtsverhältnis von 10 : 1 bis 2 : 1 oder
(b) der Alkohol A und der Alkohol C in einem Gewichtsverhältnis von 50 : 1 bis 1 : 5 eingesetzt werden, oder
(a) und (b) gleichzeitig gilt.

9. Verfahren nach einem der vorhergehenden Ansprüche, wobei unabhängig voneinander:
(a) der Alkohol A und der Alkohol B in einem Gewichtsverhältnis von 10 : 1 bis 2 : 1; oder
(b) der Alkohol A und der Alkohol C in einem Gewichtsverhältnis von 50 : 1 bis 2:1; oder
(c) der Alkohol B und der Alkohol C in einem Gewichtsverhältnis von 2 : 1 bis 0,5 : 1 eingesetzt werden oder
(a) und (b) oder (a) und (c) oder (a) und (b) und (c) gleichzeitig gelten.

10. Verfahren nach einem der vorhergehenden Ansprüche, wobei die Polyisocyanate
- ein Diisocyanat eines aliphatischen Kohlenwasserstoffs mit 4 bis 15 Kohlenstoffatomen und/oder
- ein Diisocyanat eines cycloaliphatischen Kohlenwasserstoffs mit 6 bis 15 Kohlenstoffen und/oder
- ein Diisocyanat eines aromatischen Kohlenwasserstoffs mit 6 bis 15 Kohlenstoffatomen
sind.

11. Verfahren nach einem der vorhergehenden Ansprüche, wobei die Umsetzung bzw. die Umsetzungen mit den Alkoholen A, B, C und ggf. D bei 30 bis 140 °C durchgeführt werden, vorzugsweise bei 50 bis 90 °C.

12. Verfahren nach einem der vorhergehenden Ansprüche, wobei das Präpolymer eine Säurezahl von 10 bis 50 nach DIN EN ISO 2114 aufweist.

13. Verfahren nach einem der vorhergehenden Ansprüche, wobei - insbesondere wenn der Alkohol B Carboxyl-Gruppen-enthält - zur Neutralisation ein Neutralisierungsmittel eingesetzt wird und das Neutralisierungsmittel vorzugsweise ein Amin ist und das Amin vorzugsweise ein tertiäres oder sekundäres Amin oder eine Mischung davon ist, bevorzugt N,N-Dimethylethanolamin, N-Methyldiethanolamin, Triethanolamin, N,N-Dimethylisopropanolamin, N-Methyldiisopropanolamin, N-Methylmorpholin, N-Ethylmorpholin, Triethylamin oder eine Mischung davon, insbesondere N,N-Dimethylethanolamin.

14. Verfahren nach einem der vorhergehenden Ansprüche, wobei das Präpolymer vor oder nach dem Dispergieren in Wasser zum Erhalt der Dispersion mit einer Verbindung enthaltend zumindest zwei NCO-reaktive Gruppen zur Kettenverlängerung umgesetzt wird, wobei die NCO-reaktiven Gruppen Hydroxyl-, Amin- und/oder Hydrazin-Gruppen sind und die zumindest zwei NCO-Gruppen enthaltende Verbindung, insbesondere 3 bis 12 Kohlenstoffatome aufweisen.

15. Verfahren nach einem der vorhergehenden Ansprüche, wobei wenn weiterhin Alkohol D eingesetzt wird, bei der Umsetzung der Alkohole A, B, C und D mit dem Polyisocyanat weiterhin Acrylat-Monomere zugegen sind, wobei die Acrylat-Monomere nach dem Dispergieren des Präpolymers, ggf. kettenverlängert gemäß Anspruch 14, in Wasser mit der Doppelbindung des eingebauten Alkohols D in Gegenwart eines Initiators oder bei Abwesenheit von Alkohol D durch radikalische Spaltung von Kohlenstoff-Wasserstoff-Bindungen in den Acrylatmonomeren umgesetzt werden, vorzugsweise bei einer Temperatur von größer 30°C.

16. Verfahren nach einem der Ansprüche 14 oder 15, wobei die Dispersion unabhängig voneinander durch eines oder mehrere der folgenden Merkmale gekennzeichnet ist:
a) die Dispersion weist Polyurethanteilchen eines mittleren Durchmessers von 10 bis 150 nm, und bei Verzicht auf eine acrylmodifizierte Pfropfung, vorzugsweise 15 bis 120 nm, besonders bevorzugt 18 bis 80 nm, am meisten bevorzugt 18 bis 60 nm auf;
b) die Dispersion weist einen Feststoffgehalt von 30 bis 55 Gew.%, bestimmt nach DIN EN ISO 3251 auf;
c) die Dispersion weist eine Viskosität bei 20°C von 30 bis 600 mPas nach DIN ISO 976; und/oder
d) die Dispersion weist einen pH-Wert bei 20°C von 7,0 bis 9,5, insbesondere von 7,0 bis 9,0 auf.

17. Verfahren nach einem der vorhergehenden Ansprüche, wobei der Alkohol C 9,10-Dihydro-9-oxa-10-oxid-10-[2,3-di-(2-hydroxyethoxy)carbonylpropyl]-10-phosphaphenanthren-10-oxid ist.

18. Wässrige Polyurethandispersion erhältlich nach einem Verfahren gemäß einem der Ansprüche 1 bis 17.

19. Verwendung der Polyurethandispersion gemäß Anspruch 18 als flammgehemmtes wässriges 1- oder 2-Komponenten-Beschichtungsmittel, zur Beschichtung von Holz, Holzwerkstoffen, mineralischen Baustoffen, Metallen, Textilien, Leder, Kunststoffen und/oder Papier.

## Claims

1. A method for preparing an aqueous dispersion comprising an isocyanate-terminated prepolymer having an NCO/OH ratio greater than 1.1: 1 to 2.5: 1, comprising at least reacting
- at least one alcohol A, B and C each and, optionally D,
- with at least one polyisocyanate having at least two isocyanate groups,
- wherein alcohol A has at least two hydroxy groups and an average molecular weight of 400 to 5000 g/mol (number average),
- wherein alcohol B has at least two hydroxy groups and either at least one sulphonic acid group in salt form with an alkaline or alkaline earth counterion or at least one carboxyl group (COOH or COO⁻ group),
- wherein alcohol C has at least one side group and two hydroxy groups or at least one side group having an epoxide group, wherein the side group contains at least one phosphorus atom spaced from the main chain by at least one carbon atom, and the phosphorus atom is part of an O=P(-O-)(-C~)(-C~) phosphinate group,
- wherein optional alcohol D has at least one hydroxyl group and at least one double bond, and
the prepolymer is dispersed in water.

2. The method according to claim 1, wherein alcohol A is a polyether polyol, a polyester polyol, a polycarbonate diol, a polyacrylate polyol, a polyhydroxylolefin, a polycaprolactone diol or a mixture thereof, and wherein independently thereof and preferably alcohol A has an average molecular weight of 500 to 2000 g/mol (number average).

3. The method according to any one of the preceding claims, wherein alcohol A has an average OH functionality from 1.9 to 4, preferably from 1.9 to 2.3.

4. The method according to any one of the preceding claims, wherein alcohol B contains 3 to 10 carbon atoms, especially 3 to 6 carbon atoms.

5. The method according to any one of the preceding claims, wherein the phosphorus atom is bonded to the main chain via a CH₂ group, the main chain having hydroxy groups.

6. The method according to any one of the preceding claims, wherein alcohol D is an acrylate monomer having hydroxyl functionality and having 3 to 8 carbon atoms and preferably having only one hydroxyl group.

7. The method according to any one of the preceding claims, wherein the prepolymer is built up as follows such that
55-90% of the C atoms of alcohol A, especially 75-85%, are formed;
5-15% of the C atoms of alcohol B, especially 8-12%, are formed;
0.1-25% of the C atoms of alcohol C, especially 0.5-10%, are formed; and optionally
0-5% of the C atoms of alcohol D, especially 0.1-3%, are formed.

8. The method according to any one of the preceding claims, wherein
(a) alcohol A and alcohol B are used at a ratio by weight of 10: 1 to 2: 1 or
(b) alcohol A and alcohol C are used at a ratio by weight of 50: 1 to 1: 5 are used, or
(a) and (b) apply simultaneously.

9. The method according to any one of the preceding claims, wherein independently of each other:
(a) alcohol A and alcohol B are used at a ratio by weight of 10: 1 to 2: 1; or
(b) alcohol A and alcohol C are used at a ratio by weight of 50: 1 to 2:1; or
(c) alcohol B and alcohol C are used at a ratio by weight of 2: 1 to 0.5: 1; or
(a) and (b) or (a) and (c) or (a) and (b) and (c) apply simultaneously.

10. The method according to any one of the preceding claims, wherein the polyisocyanates are
- a diisocyanate of an aliphatic hydrocarbon having 4 to 15 carbon atoms and/or
- a diisocyanate of a cycloaliphatic hydrocarbon having 6 to 15 carbons and/or
- a diisocyanate of an aromatic hydrocarbon having 6 to 15 carbon atoms.

11. The method according to any one of the preceding claims, wherein the reaction or reactions with alcohols A, B, C and optionally D are carried out at 30 to 140°C, preferably at 50 to 90 °C.

12. The method according to any one of the preceding claims, wherein the prepolymer has an acid value of 10 to 50 according to DIN EN ISO 2114.

13. The method according to any one of the preceding claims, wherein - especially if alcohol B contains carboxyl groups - a neutralising agent is used for neutralisation and the neutralising agent is preferably an amine and the amine is preferably a tertiary or secondary amine or a mixture thereof, preferably N,N-dimethylethanolamine, N-methyldiethanolamine, triethanolamine, N,N-dimethylisopropanolamine, N-methyldiisopropanolamine, N-methylmorpholine, N-ethylmorpholine, triethylamine or a mixture thereof, especially N,N-dimethylethanolamine.

14. The method according to any one of the preceding claims, wherein the prepolymer is reacted with a compound containing at least two NCO-reactive groups for chain extension before or after being dispersed in water to obtain the dispersion, wherein the NCO-reactive groups are hydroxyl, amine and/or hydrazine groups and the compound containing at least two NCO groups has, especially, 3 to 12 carbon atoms.

15. The method according to any one of the preceding claims, wherein - if alcohol D is continued to be used - acrylate monomers are still present during the reaction of alcohols A, B, C and D with the polyisocyanate, wherein the acrylate monomers, after dispersion of the prepolymer, optionally chain-extended according to claim 14, are reacted with the double bond of the incorporated alcohol D in water in the presence of an initiator or, in the absence of alcohol D, by radical cleavage of carbon-hydrogen bonds in the acrylate monomers, preferably at a temperature of greater than 30 °C.

16. The method according to any one of claims 14 or 15, wherein the dispersion is independently **characterised by** one or more of the following features:
a) the dispersion has polyurethane particles of an average diameter of 10 to 150 nm, and if acrylic-modified grafting is done without, preferably 15 to 120 nm, more preferably 18 to 80 nm, most preferably 18 to 60 nm;
b) the dispersion has a solids content of 30 to 55 wt.%, determined according to DIN EN ISO 3251;
c) the dispersion has a viscosity at 20 °C of 30 to 600 mPas according to DIN ISO 976; and/or
d) the dispersion has a pH at 20 °C of 7.0 to 9.5, especially of 7.0 to 9.0.

17. The method according to any one of the preceding claims, wherein alcohol C is 9,10-dihydro-9-oxa-10-oxide-10-[2,3-di-(2-hydroxyethoxy)carbonylpropyl]-10-phosphaphenanthrene-10-oxide.

18. An aqueous polyurethane dispersion obtainable by a method according to any one of claims 1 to 17.

19. The use of the polyurethane dispersion according to claim 18 as a flame-retardant aqueous 1- or 2-component coating agent, for coating wood, wood-based materials, mineral building materials, metals, textiles, leather, plastics, and/or paper.

## Revendications

1. Procédé de préparation d'une dispersion aqueuse comprenant un prépolymère à terminaison isocyanate ayant un rapport NCO/OH supérieur à 1,1 : 1 à 2,5 : 1, comprenant au moins la mise en oeuvre de
- au moins un alcool A, B et C respectivement, et éventuellement D,
- avec au moins un polyisocyanate présentant au moins deux groupes isocyanate,
- l'alcool A présentant au moins deux groupes hydroxyle et un poids moléculaire moyen de 400 à 5000 g/mol (moyenne numérique),
- l'alcool B présentant au moins deux groupes hydroxyle et soit au moins un groupe acide sulfonique sous forme de sel avec un contre-ion alcalin ou alcalino-terreux, soit au moins un groupe carboxyle (groupe COOH ou COO⁻),
- l'alcool C ayant au moins un groupe latéral et deux groupes hydroxyle ou au moins un groupe latéral avec un groupe époxyde, le groupe latéral contenant au moins un atome de phosphore éloigné de la chaîne principale par au moins un atome de carbone, et l'atome de phosphore faisant partie d'un groupe phosphinate O=P(-O-)(-C~)(-C~),
- l'alcool facultatif D ayant au moins un groupe hydroxyle et au moins une double liaison, et
le prépolymère étant dispersé dans l'eau.

2. Procédé selon la revendication 1, dans lequel l'alcool A est un polyéther polyol, un polyester polyol, un polycarbonate diol, un polyacrylate polyol, une polyhydroxyloléfine, un polycaprolactone diol ou un mélange de ceux-ci, et aussi indépendamment de cela, préférentiellement l'alcool A a un poids moléculaire moyen de 500 à 2000 g/mol (moyenne numérique).

3. Procédé selon l'une des revendications précédentes, dans lequel l'alcool A présente une fonctionnalité OH moyenne de 1,9 à 4, préférentiellement de 1,9 à 2,3.

4. Procédé selon l'une des revendications précédentes, dans lequel l'alcool B contient de 3 à 10 atomes de carbone, en particulier de 3 à 6 atomes de carbone.

5. Procédé selon l'une des revendications précédentes, dans lequel l'atome de phosphore est lié par un groupe CH₂ à la chaîne principale présentant des groupes hydroxyle.

6. Procédé selon l'une des revendications précédentes, dans lequel l'alcool D est un monomère acrylate à fonction hydroxyle ayant de 3 à 8 atomes de carbone et ayant préférentiellement un seul groupe hydroxyle.

7. Procédé selon l'une des revendications précédentes, dans lequel le prépolymère est constitué de la manière suivante, à savoir que
55 à 90 % des atomes de carbone de l'alcool A sont formés, en particulier 75 à 85 %,
5 à 15 % des atomes de carbone de l'alcool B sont formés, en particulier 8 à 12 %,
0,1 à 25 % des atomes de carbone de l'alcool C sont formés, en particulier 0,5 à 10 %, et éventuellement
0 à 5 % des atomes de carbone de l'alcool D sont formés, en particulier 0,1 à 3 %.

8. Procédé selon l'une des revendications précédentes, dans lequel
(a) l'alcool A et l'alcool B dans un rapport pondéral de 10 : 1 à 2 : 1 ou
(b) l'alcool A et l'alcool C dans un rapport pondéral de 50 : 1 à 1 : 5 sont utilisés, ou
(a) et (b) s'appliquent simultanément.

9. Procédé selon l'une des revendications précédentes, dans lequel, indépendamment :
(a) l'alcool A et l'alcool B dans un rapport pondéral de 10 : 1 à 2 : 1 ou
(b) l'alcool A et l'alcool C dans un rapport pondéral de 50 : 1 à 2 : 1 ou
(c) l'alcool B et l'alcool C dans un rapport pondéral de 2 : 1 à 0,5 : 1 sont utilisés, ou
(a) et (b) ou (a) et (c) ou (a) et (b) et (c) s'appliquent simultanément.

10. Procédé selon l'une des revendications précédentes, dans lequel les polyisocyanates
- sont un diisocyanate d'un hydrocarbure aliphatique ayant de 4 à 15 atomes de carbone et/ou
- un diisocyanate d'un hydrocarbure cycloaliphatique ayant de 6 à 15 atomes de carbone et/ou
- un diisocyanate d'un hydrocarbure aromatique ayant de 6 à 15 atomes de carbone.

11. Procédé selon l'une des revendications précédentes, dans lequel la ou les réactions avec les alcools A, B, C et éventuellement D sont réalisées entre 30 et 140°C, préférentiellement entre 50 et 90°C.

12. Procédé selon l'une des revendications précédentes, dans lequel le prépolymère présente un indice d'acide de 10 à 50 selon la norme DIN EN ISO 2114.

13. Procédé selon l'une des revendications précédentes, dans lequel, en particulier lorsque l'alcool B contient des groupes carboxyle, un agent de neutralisation est utilisé pour la neutralisation et l'agent de neutralisation est préférentiellement une amine et l'amine est préférentiellement une amine tertiaire ou secondaire ou un mélange de celles-ci, préférentiellement la N,N-diméthyléthanolamine, la N-méthyldiéthanolamine, la triéthanolamine, la N,N-diméthylisopropanolamine, la N-méthyldiisopropanolamine, la N-méthylmorpholine, la N-éthylmorpholine, la triéthylamine ou un mélange de celles-ci, en particulier la N,N-diméthyléthanolamine.

14. Procédé selon l'une des revendications précédentes, dans lequel le prépolymère est mis en oeuvre avec un composé contenant au moins deux groupes réactifs avec les groupes NCO pour l'allongement de la chaîne, avant ou après la dispersion dans l'eau pour obtenir la dispersion, les groupes réactifs avec les groupes NCO étant des groupes hydroxyle, amine et/ou hydrazine et le composé contenant au moins deux groupes NCO, présentant en particulier 3 à 12 atomes de carbone.

15. Procédé selon l'une des revendications précédentes, dans lequel, si l'on continue à utiliser l'alcool D, des monomères d'acrylate sont encore présents lors de la réaction des alcools A, B, C et D avec le polyisocyanate, les monomères d'acrylate étant mis en oeuvre par coupure radicalaire des liaisons carbone-hydrogène dans les monomères acrylate, après dispersion du prépolymère, éventuellement allongé en chaîne selon la revendication 14, dans l'eau avec la double liaison de l'alcool D incorporé en présence d'un initiateur ou en l'absence d'alcool D, préférentiellement à une température supérieure à 30°C.

16. Procédé selon l'une des revendications 14 ou 15, dans lequel la dispersion est **caractérisée** indépendamment par une ou plusieurs des caractéristiques suivantes :
a) la dispersion présente des particules de polyuréthane d'un diamètre moyen de 10 à 150 nm et, en l'absence d'un greffage modifié par un acrylique, préférentiellement de 15 à 120 nm, de manière particulièrement préférentielle de 18 à 80 nm, plus préférentiellement de 18 à 60 nm,
b) la dispersion présente une teneur en matières solides de 30 à 55 % en poids, déterminée selon la norme DIN EN ISO 3251,
c) la dispersion présente une viscosité à 20°C de 30 à 600 mPas selon la norme DIN ISO 976, et/ou
d) la dispersion présente un pH à 20°C de 7,0 à 9,5, en particulier de 7,0 à 9,0.

17. Procédé selon l'une des revendications précédentes, dans lequel l'alcool C est le 9,10-dihydro-9-oxa-10-oxyde-10-[2,3-di-(2-hydroxyéthoxy)carbonylpropyl]-10-phosphaphénanthrène-10-oxyde.

18. Dispersion aqueuse de polyuréthane pouvant être obtenue par un procédé selon l'une des revendications 1 à 17.

19. Utilisation de la dispersion de polyuréthane selon la revendication 18, comme agent de revêtement aqueux ignifugé à 1 ou 2 composants, pour le revêtement du bois, des matériaux en bois, des matériaux de construction minéraux, des métaux, des textiles, du cuir, des matières plastiques et/ou du papier.
